# EUROPÄISCHE PATENTSCHRIFT

(11) **EP 0 691 460 B1**
(45) Veröffentlichungstag und Bekanntmachung des Hinweises auf die Patenterteilung: **04.11.1998**
(21) Anmeldenummer: 95110524.6
(22) Anmeldetag: 06.07.1995
(51) Int. Cl.: F01N 3/28

(54) **Verfahren zum ein- oder beidseitigen Verschliessen oder Füllen von Strömungskanälen in einer Ringzone eines zylindrischen Wabenkörpers**
Method for closing or filling of flow channels at one or both sides in a ring area of a cylindrical honeycomb
Procédé pour fermer ou remplir des canaux d'écoulement à un ou chaque côté dans une zone circulaire d'une structure en nids d'abeilles cylindrique

(30) Priorität: 08.07.1994 DE 4424019
(43) Veröffentlichungstag der Anmeldung: 10.01.1996
(73) Patentinhaber: Degussa Aktiengesellschaft, 60311 Frankfurt (DE)
(72) Erfinder: Domesle, Rainer, Dr., D-63755 Alzenau (DE); Engler, Bernd, Dr., White Plains, NY 10605 (US); Kuhl, Wolfgang, D-63457 Hanau (DE); Lox, Egbert, Dr., D-63457 Hanau (DE); Fehnle, Oliver, D-79618 Rheinfelden (DE); Leibold, Walter, D-36936 Steinau-Ulmbach (DE)

(56) Entgegenhaltungen:
- DE-A- 3 109 314
- DE-C- 4 238 120
- US-A- 5 219 667

## Beschreibung

Die Erfindung betrifft ein Verfahren zum ein- oder beiseitigen Verschließen oder Füllen von Strömungskanälen in einer Ringzone eines zylindrischen Wabenkörpers.

Monolithische Wabenkörper werden in der Autoabgaskatalyse als Tragkörper für die katalytisch aktive Beschichtung verwendet. Diese Tragkörper weisen in der Regel eine allgemeine zylindrische Form auf mit einer umhüllenden Mantelfläche und zwei Querschnitts- bzw. Stirnflächen als Ein- und Austrittsflächen für die zu reinigenden Abgase. Die Querschnittsform der Tragkörper kann in weiten Grenzen den Raumerfordernissen am Kraftfahrzeug angepaßt werden. So sind zum Beispiel kreisförmige, elliptische, quadratische, rechteckige, dreieckige und asymmetrische Stirnflächenquerschnitte der Tragkörper bekannt.

Die zylindrischen Wabenkörper beliebiger Stirnflächenkontur sind von parallelen Strömungskanälen für die zu reinigenden Abgase durchzogen. Die Strömungskanäle bilden auf den Stirnflächen der Wabenkörper eine Zellstruktur, deren Dichte je nach Anwendungsfall zwischen 5 und 200 Zellen/cm² liegen kann. Typische Wabenkörper für die Abgasreinigung von Personenkraftwagen weisen zum Beispiel eine Länge von etwa 150 mm, einen Durchmesser von 100 mm und eine Zelldichte von 62 Zellen/cm² auf. Die Wandstärke der Strömungskanäle beträgt in diesem Fall 0,16 mm. Bei den Wabenkörpern kann es sich um extrudierte Keramikwabenkörper oder um Metallwabenkörper handeln.

Die Keramikwabenkörper weisen in der Regel Strömungskanäle mit quadratischem Querschnitt auf, die regelmäßig angeordnet sind, während die Strömungskanäle der Metallwabenkörper je nach Bauart unterschiedlich geformte Kanalquerschnitte aufweisen können.

Werden diese Wabenkörper als Tragkörper für die katalytisch aktiven Komponenten zum Beispiel in der Autoabgaskatalyse eingesetzt, so werden die Innenwandungen der Strömungskanäle zunächst mit einer feinteiligen Beschichtung aus temperaturbeständigen Metalloxiden belegt, die eine hohe spezifische Oberfläche aufweisen.

Geeignete Metalloxide sind zum Beispiel γ-Aluminiumoxid, Titanoxid, Siliziumoxid, Ceroxid, verschiedene Zeolithe oder Mischungen davon, wobei die Metalloxide zur Temperaturstabilisierung noch mit zum Beispiel Seltenerdoxiden dotiert sein können. Die spezifische Oberfläche dieser hochoberflächigen Metalloxide liegt üblicherweise oberhalb von 10 m²/g und insbesondere zwischen 50 und 400 m²/g.

Zum Aufbringen der hochoberflächigen Metalloxidbeschichtung werden die Wabenkörper zum Beispiel mit einer wäßrigen Beschichtungsdispersion aus den feinteiligen Metalloxiden geflutet. Die Strömungskanäle werden anschließend durch Ausblasen mit Druckluft von überschüssiger Beschichtungsdispersion befreit.

Auf der großen Oberfläche der Metalloxidbeschichtung können dann noch die katalytisch aktiven Edelmetallkomponenten, bevorzugt Metalle der Platingruppe, zum Beispiel durch Imprägnieren mit wäßrigen Lösungen von löslichen Verbindungen dieser Metalle in feindisperser Form abgeschieden werden, sofern diese nicht schon der Beschichtungsdispersion zugefügt wurden.

Nach dem Beschichten wird die Beschichtung gewöhnlich getrocknet und gegebenenfalls zur Härtung und Verbesserung der Haftung calciniert.

Für die Anwendungen in der Abgasreinigung kann es vorteilhaft sein, die in einer Ringzone, insbesondere einer Randzone, befindlichen Strömungskanäle der Wabenkörper ein- oder beidseitig von den Stirnflächen her zu verschließen bzw. zu verstopfen oder vollständig über die gesamte Länge des Wabenkörpers zu füllen.

So beschreibt die DE 31 09 314 C2 keramische Wabenkörper, die durch Füllen der Strömungskanäle in einer Randzone der Körper mit einer keramischen Masse in ihrer mechanischen Stabilität verstärkt werden. Die Strömungskanäle können entweder auf ihrer gesamten Länge oder nur auf Teilstücken mit dem Keramikmaterial befüllt werden. Die Teilstücke erstrecken sich dabei von den beiden Stirnflächen aus bis zu einer gewissen Tiefe in die Wabenkörper hinein. Die DE 31 09 314 nennt als geeignete Keramikmaterialien Cordierit, Mullit oder gießbare feuerbeständige Materialien wie Aluminiumoxidzement. Um nur die in der Randzone des Wabenkörpers liegenden Strömungskanäle mit dem keramischen Füllmaterial zu befüllen, werden die restlichen Strömungskanäle durch eine Abdeckmaske aus Plastik abgedeckt.

Die DE 42 36 883 A1 beschreibt einen Katalysator, dessen Wärmeabstrahlung nach außen dadurch verringert wird, daß die Strömungskanäle in einer umlaufenden Randzone des Katalysatorkörpers entweder anströmseitig oder anström- und abströmseitig verschlossen sind. Die 42 36 883 macht keine Angaben dazu, wie die Strömungskanäle verschlossen werden können und mit welchem Material dies erfolgen soll.

Die JP-AS 5-63206 beschreibt ein Verfahren zum Verschließen der Strömungskanäle von Wabenkörpern in einer Randzone, bei welchem eine keramische Masse mit einer kleinen Bürste von beiden Seiten in die Strömungskanäle eingebürstet wird. Die Randzone hat eine Breite von bis zu 3 mm. Die Strömungskanäle werden dabei bis in eine Tiefe von etwa 3 mm gefüllt. Ziel dieser Maßnahme ist es, solche Strömungskanäle zu verschließen, die beim Einbau des Wabenkörpers in das Abgassystem eines Automobils durch notwendige Halteelemente abgedeckt werden und somit nicht für die Abgasreinigung genutzt werden können. Durch Verschließen dieser Strömungskanäle vor dem Aufbringen der Katalysatorbeschichtung wird wertvolles katalytisch aktives Material eingespart.

Die DE 42 38 120 C1 beschreibt ein Verfahren zum rechnergesteuerten, stirnseitigen, wechselweisen Verschließen von Kanälen eines Wabenkörper-Monolithen für Abgasreinigungsanlagen von Verbrennungsmotoren. Das Verschließen erfolgt durch Einbringen einer keramischen Masse in die Strömungskanäle mittels Dosierdüsen. Die Dosierdüsen werden zu diesem Zweck in die zu verschließenden Kanäle eingeführt. Eine Relativbewegung zwischen Düsen und Wabenkörper während des Verschließens ist nicht möglich.

Aufgabe der vorliegenden Erfindung ist es, ein Verfahren anzugeben, welches ein sauberes und rationelles Verschließen oder Füllen von Strömungskanälen in einer Ringzone eines zylindrischen Wabenkörpers erlaubt, welcher von einer Ein- und einer Austrittsfläche sowie einer umhüllenden Mantelfläche begrenzt wird.

Diese Aufgabe wird gelöst durch ein Verfahren zum Verschließen von Strömungskanälen in einer Ringzone eines zylindrischen Wabenkörpers mit einer keramischen Masse, welcher von zwei Stirnflächen, die die Ein- und Austrittsflächen des Wabenkörpers bilden und einer umhüllenden Mantelfläche begrenzt wird. Das Verfahren ist dadurch gekennzeichnet, daß das Einbringen der keramischen Masse in die Strömungskanäle von einer der beiden Stirnflächen aus mittels mindestens einer Düse erfolgt, die auf die Stirnfläche aufgesetzt ist oder einen geringen Abstand zur Stirnfläche aufweist, wobei Düse und Wabenkörper während des Einbringens der keramischen Masse unter Führung der Düse an der Mantelfläche und/oder an der Stirnflächenkontur relativ zueinander bewegt werden.

Die Düse wird zum Verschließen der Strömungskanäle an die Ein- oder Austrittsfläche des Wabenkörpers herangeführt. Zweckmäßigerweise wird zwischen Düsenende und der jeweiligen Stirnfläche des Wabenkörpers ein geringer Abstand eingehalten, um bei Relativbewegung zwischen Düse und Wabenkörper eine Beschädigung des Wabenkörpers zu vermeiden. Die Größe des Abstandes hängt von der Ebenheit der Ein- bzw. Austrittsfläche des Wabenkörpers sowie der Konsistenz der keramischen Masse ab. In der Regel liegt der zweckmäßige Abstand zwischen 0,1 und 1 mm.

Alternativ besteht auch die Möglichkeit, das Düsenende in Form eines Gleitschuhes auszubilden und die Düse gegebenenfalls federnd auf die Ein- bzw. Austrittsfläche des Wabenkörpers aufzusetzen. Damit besteht die Möglichkeit, auch größere Unebenheiten der Stirnflächen des Wabenkörpers auszugleichen und einen unterschiedlich starken Auftrag der keramischen Masse zu vermeiden.

Die Düsenöffnung kann kreisförmig ausgebildet sein. Bei pastöser Konsistenz der keramischen Masse kann es zweckmäßiger sein, eine rechteckig geformte Düsenöffnung zu verwenden, deren Breite die Breite der Ringzone festlegt, in der die Strömungskanäle verschlossen werden. Die minimale Breite der Ringzone sollte etwa der größten Diagonale eines Strömungskanals entsprechen, so daß die Ringzone wenigstens eine Lage von Strömungskanälen umfaßt. Je nach Anwendungserfordernis kann die Ringzone jedoch auch mehrere Lagen von Strömungskanälen umfassen, was eine entsprechend breitere Düsenöffnung erfordert. Bei rechteckiger Ausbildung der Düsenöffnung kann die Breite der zu verschließenden Ringzone sehr einfach durch axiales Verdrehen der Düse angepaßt werden. Durch entsprechendes axiales Verdrehen der Düse während des Verschließens der Ringzone können auch an einem Wabenkörper unterschiedliche Verstopfungsbreiten realisiert werden. Die minimale Breite der Ringzone wird dann durch die kurze Seite und die maximale Breite durch die lange Seite bzw. der Diagonalen der rechteckigen Düsenöffnung festgelegt.

Eine wesentliche Maßnahme des erfindungsgemäßen Verfahrens besteht darin, daß die Düse während der Relativbewegung zwischen Wabenkörper und Düse an der Mantelfläche des Wabenkörpers geführt wird. Dies kann in einfacher Weise rein mechanisch durch ein federnd gelagertes am Mantel abrollendes Rad bzw. durch einen Radsatz oder durch einen Gleitschuh beliebiger Form erfolgen. Neben dieser direkten Führung kann die Führung auch indirekt über ein Kopiersystem durchgeführt werden, das einen zweiten Wabenkörper gleicher Querschnittsgeometrie abtastet. Ebenso sind optische Abtastsysteme zur indirekten Führung der Düse möglich, wobei die Stirnflächenkontur des Wabenkörpers mit einem optischen System mittels einer Kamera und angeschlossenem Bildauswertesystem oder eines konturabtastenden Laserstrahles erfaßt wird. Gegebenenfalls können auch mehrere sich ergänzende Führungssysteme gleichzeitig angewandt werden.

Die Düse kann in diesem Fall bei gleichzeitiger Drehung des Wabenkörpers um seine Längsachse durch ein geeignetes Regelsystem in radialer Richtung verschoben werden, um der Kontur der Stirnfläche zu folgen. Alternativ ermöglicht es diese indirekte Führung auch, bei ruhendem Wabenkörper allein die Düse durch eine xy-Verschiebung entsprechend der Querschnittskontur des Wabenkörpers über die Stirnfläche zu führen.

Durch das erfindungsgemäße Verfahren ist sichergestellt, daß die Ringzone einen über den gesamten Umfang des Wabenkörpers stets gleichen Abstand vom Rand des Wabenkörpers aufweist. Die Ringzone ist also zum Umfang des Wabenkörpers konzentrisch angeordnet.

Die Form der Ringzone stimmt mit der Querschnittsform des Wabenkörpers überein. Nur im Falle eines Wabenkörpers mit kreisförmigem Querschnitt handelt es sich um eine Kreiszone. Im Falle ovaler Wabenkörper hat die Ringzone auch eine ovale Form.

In der Regel wird die Ringzone direkt die Randzone des Wabenkörpers bilden und 2 bis 5 Lagen von Strömungskanälen umfassen. Dabei können alle Strömungskanäle längs des gesamten Umfanges der Ring- bzw. Randzone verschlossen werden oder auch nur die Strömungskanäle in über den Umfang verteilten Teilbereichen der Ringzone. Ein Vorteil des erfindungsgemäßen Verfahrens ist es in diesem Fall, daß durch die Zuführung der keramischen Masse mit einer Düse beim Verschließen bzw. Verstopfen der Randzone eine Verschmutzung der Mantelfläche des Wabenkörpers weitgehend vermieden wird.

Das Verschließen aller Strömungskanäle der Randzone ist zweckmäßig, wenn damit eine Erhöhung der mechanischen Stabilität oder eine verbesserte Wärmedämmung erzielt werden soll. Das Verschließen von Teilbereichen der Randzone wird angewendet, wenn der Wabenkörper nur durch einige diskrete Laschen auf den beiden Stirnflächen im Abgassystem gehalten wird. Es werden dann nur die Strömungskanäle verschlossen, die nach dem Einbau in das Abgassystem durch die Befestigungslaschen verdeckt werden. Auf diese Weise wird die maximal mögliche Querschnittsfläche für die Abgasreinigung freigehalten.

Mit dem erfindungsgemäßen Verfahren können die nur in Teilbereichen der Ringzone verschlossenen Strömungskanäle in einfacher Weise durch entsprechende Steuerung der Zufuhr an keramischer Masse z. B. durch Einpreßdruck realisiert werden. Zur Erhöhung der Produktivität können in diesem Fall und auch bei durchgehend verschlossener Ringzone mehrere auf dem Umfang verteilte Düsen eingesetzt werden.

Das erfindungsgemäße Einbringen der keramischen Masse mit mindestens einer Düse in die Strömungskanäle des Wabenkörpers ist sehr flexibel. Ein Abdecken der nicht zu verschließenden Strömungskanäle mit einer Abdeckmaske, wie es zum Beispiel in der DE 31 09 314 C2 beschrieben wird, ist nicht notwendig. Vielmehr gewährleistet die Führung der Düse am Mantel und/oder an der Stirnflächenkontur des Wabenkörpers die Verarbeitung von Wabenkörpern unterschiedlicher Querschnittsformen nacheinander ohne Umrüstungen der Apparatur. Ebenso bilden Fertigungstoleranzen der Querschnittsformen keine Schwierigkeiten.

Die Relativbewegung zwischen Düse und Wabenkörper wird bei einer wichtigen Ausführungsform des Verfahrens durch Drehen des Wabenkörpers um seine Zylinderachse realisiert, während die Düse in radialer Richtung verschieblich angeordnet ist, um den Radiusänderungen beim Drehen der Wabenkörper folgen zu können. Bei einer weiteren Ausführungsform des Verfahrens wird die Düse um den feststehenden Wabenkörper geführt. Selbstverständlich können auch Wabenkörper und Düse gleichzeitig bewegt werden.

Das erfindungsgemäße Verfahren kann in gleicher Weise auf keramische und metallische Wabenkörper mit Zelldichten zwischen 5 und 200 Zellen/cm² angewendet werden und ist nicht auf bestimmte Werkstoffe für die Wabenkörper begrenzt. So toleriert das Verfahren alle gängigen hochtemperaturfesten Materialien für keramische Wabenkörper wie zum Beispiel Cordierit, Mullit, α-Aluminiumoxid, Zirkonoxid, Titanoxid, Titanphosphat, Aluminiumtitanat, Spodumen, Aluminiumsilikat und Magnesiumsilikat. Auch metallische Wabenkörper aus Edelstahl, Fe-Cr-Al-Legierungen, Aluminium und anderen Metallen oder Metallegierungen können verarbeitet werden.

Als keramische Massen bzw. Füllmassen oder Verstopfungsmaterial für das Verschließen oder Füllen der Strömungskanäle kommen bevorzugt Pasten bzw. Dispersionen aus feuerfesten Oxiden in Form von wenig porösen Pulvern oder deren Vorläuferverbindungen wie zum Beispiel Hydroxiden mit geeigneten Zuschlagstoffen wie Fasern, organischen Hilfsstoffen und anorganischen Bindern sowie Befeuchtungs- und Gleitmitteln zur Anwendung. Als anorganische Binder eignen sich Kieselsol, Zirkonoxidsol oder spezielle Aluminiumhydroxide. Darüber hinaus sind auch selbsthärtende, temperaturbeständige Zemente mit geringer Schwindung geeignet. Bevorzugt wird eine keramische Masse eingesetzt, die in ihrer Zusammensetzung der Beschichtungsdispersion für die hochoberflächige Metalloxidbeschichtung des Wabenkörpers entspricht.

Das Einbringen der keramischen Masse erfolgt vorteilhafterweise vor dem Beschichten des Wabenkörpers mit der katalytisch aktiven Beschichtung. Dadurch wird wertvolles, katalytisch aktives Beschichtungsmaterial eingespart. Nach dem Verschließen der Strömungskanäle kann die eingebrachte keramische Masse bei Raumtemperatur oder erhöhten Temperaturen von zum Beispiel 80 bis 200° C getrocknet werden. Besonders vorteilhaft ist das Trocknen der keramischen Masse mit Mikrowellen, bei denen sich die Erwärmung des Wabenkörpers auf die feuchte keramische Masse beschränkt. An die Trocknung kann sich ein Kalzinierungsschritt bei 200 bis 600° C zur endgültigen Aushärtung der keramischen Masse anschließen. Gegebenenfalls kann sogar ein Brennvorgang bei Temperaturen, wie sie bei der Herstellung keramischer Wabenkörper angewendet werden, vorteilhaft sein.

Im Falle hochviskoser Füllmassen kann - besonders bei porösen Keramikträgern mit gutem Saugvermögen - auf den beschriebenen Trockenvorgang verzichtet und unmittelbar nachfolgend die Dispersionsbeschichtung ausgeführt werden. Diese Vorgehensweise empfiehlt sich besonders bei selbsthärtendem Füllmaterial wie keramischen Zementen oder organischen Härtezusätzen.

Eine eventuell notwendiger Calcinierungsschritt zur Härtung der Füllmasse erfolgt zweckmäßigerweise jedoch gleichzeitig mit der später aufzubringenden katalytisch aktiven Beschichtung.

Um eine ausreichende Temperaturwechselbeständigkeit der behandelten Wabenkörper zu gewährleisten, ist es besonders bei keramischen Wabenkörpern notwendig, die thermischen Ausdehnungskoeffizienten von Wabenkörper und fertig ausgehärteter Füllmasse aneinander anzupassen. Bewährt haben sich thermische Ausdehnungskoeffizienten der ausgehärteten Füllmassen, die höchstens das Fünffache, bevorzugt höchstens das Dreifache des Ausdehnungskoeffizienten des Wabenkörpers betragen.

Mit dem erfindungsgemäßen Verfahren können die Strömungskanäle entweder einseitig oder beidseitig gleichzeitig oder nacheinander verschlossen werden. Besonders vorteilhaft ist das nur einseitige Verschließen der Strömungskanäle. Die resultierenden Wabenkörper verhindern in Kombination mit einer geeigneten Beschichtungstechnik, daß wertvolles Beschichtungsmaterial in den für das Abgas unzugänglichen Strömungskanälen abgeschieden wird. Diese Variante des erfindungsgemäßen Verfahrens ermöglicht wegen des Wegfalls des sonst notwendigen Verschließens der Strömungskanäle an der zweiten Stirnfläche eine sehr wirtschaftliche Fertigung von beschichteten Wabenkörpern für Autoabgaskatalysatoren.

Die Einbringtiefe der keramischen Massen in den Wabenkörper kann durch geeignete Wahl der Viskosität der Masse, des eventuell angelegten Einpreßdruckes und der Geschwindigkeit, mit der die Düse über die Ringzone entlang geführt wird, eingestellt werden.

Einen wichtigen Einfluß auf die zu wählende Viskosität der keramischen Masse haben auch das Saugvermögen und die Zelldichte des Wabenkörpers. Keramische Wabenkörper mit einem hohen Saugvermögen für Wasser benötigen eine niedrigere Viskosität der Füllmasse als metallische Wabenkörper. Ebenso muß die Viskosität der Füllmasse mit steigender Zelldichte verringert werden.

Die Festlegung der genannten Parameter ist für den Fachmann jedoch durch wenige orientierende Vorversuche möglich. Bevorzugt werden Einbringtiefen bis 10 mm.

Falls erforderlich, können die Strömungskanäle auch in einem Arbeitsgang von einer Seite her vollständig gefüllt werden. Ebenso ist es möglich, in einem Arbeitsgang von beiden Seiten her die Strömungskanäle teilweise oder - im Falle gasdurchlässiger Kanalwände - vollständig zu füllen.

Obwohl der Einbringvorgang meist zu einem mit der Wabenkörperoberfläche bündig abschließenden Zellverschluß führt, kann ein tieferes Eindringen des Füllmaterials in die Zellen durch ein nachfolgendes Anblasen mit Druckluft oder durch Anlegen eines Unterdruckes gefördert werden. Ebenso ist möglich, den Einbringvorgang selbst durch Anlegen eines Über- oder Unterdruckes auf die keramische Masse zu unterstützen. Dies empfiehlt sich insbesondere, wenn die keramische Masse eine pastöse Konsistenz aufweist. Bei Anlegen eines Überdruckes wird dann die keramische Masse in die Strömungskanäle hineingepreßt. Bei Anlegen eines Unterdruckes an der gegenüberliegenden Stirnfläche des Wabenkörpers wird die keramische Masse in die Strömungskanäle hineingesaugt.

Die Figuren 1 bis 4 sollen das erfindungsgemäße Verfahren näher erläutern. Es zeigen
- Figur 1:: Eine Seitenansicht eines Wabenkörpers mit aufgesetzter Düse zum Verschließen der Strömungskanäle in der Randzone.
- Figur 2:: Draufsicht auf die Anordnung von Figur 1
- Figur 3:: Ausschnitt von Figur 1 mit einer vergrößerten Ansicht des Düsenendes.
- Figur 4:: Eine alternative Ausführungsform der Düse mit Gleitschuh.

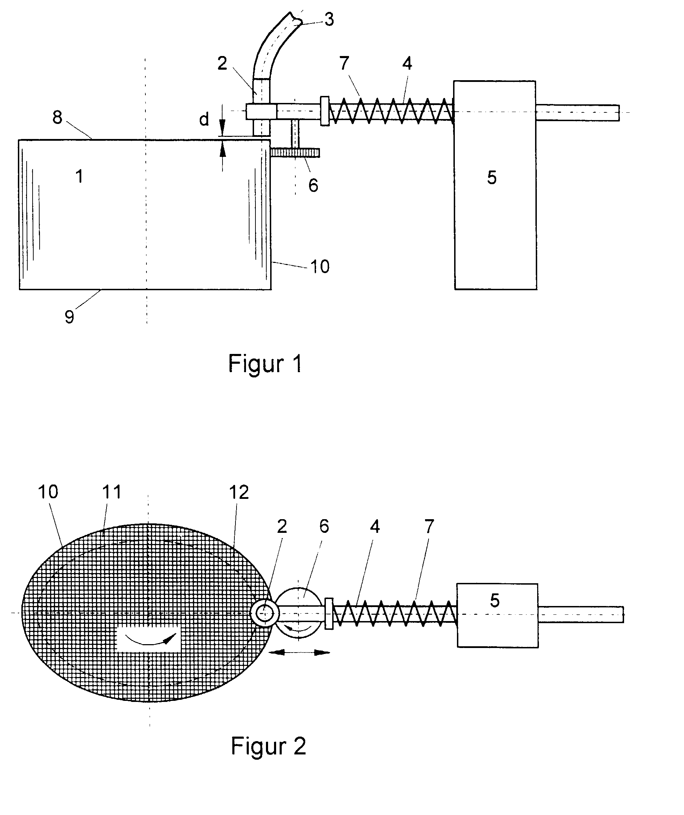

Figur 1 und 2 zeigen eine mögliche Anordnung zur Durchführung des erfindungsgemäßen Verfahrens in Seitenansicht (Figur 1) und in Draufsicht (Figur 2). (1) bezeichnet einen keramischen Wabenkörper mit ovalem Querschnitt und quadratischen Strömungskanälen. Der Wabenkörper wird durch seine Mantelfläche (10) und die beiden Endflächen (8) und (9) begrenzt, die in Betrieb die Ein- bzw. Austrittsflächen für die zu reinigenden Abgase bilden.

Die Düse (2) ist zum Verschließen der Strömungskanäle in der Randzone (11) des Wabenkörpers bis auf den Abstand d an die Endfläche (8) herangeführt. Die Düse wird durch die im Lagerbock (5) horizontal verschiebliche Führungsstange (4) gehalten. Durch die Feder (7) wird das Führungsrad (6) beim Drehen des Wabenkörpers um seine Zylinderachse stets an den Mantel (10) gepreßt. Die Düse (2) wird über die flexible Leitung (3) mit der keramischen Masse zum Verschließen der Strömungskanäle versorgt. Der geschwärzte Teil (12) der Ringzone (11) deutet die schon verschlossenen Strömungskanäle an. Anstelle des gezeigten einzigen Rollrades (6) können auch zwei Rollräder, die zum Beispiel mit der Düsenmitte ein gleichschenkliges Dreieck bilden, eingesetzt werden. Ebenso ist es möglich, das Rollrad durch einen Bolzen oder Gleitschuh zu ersetzen.

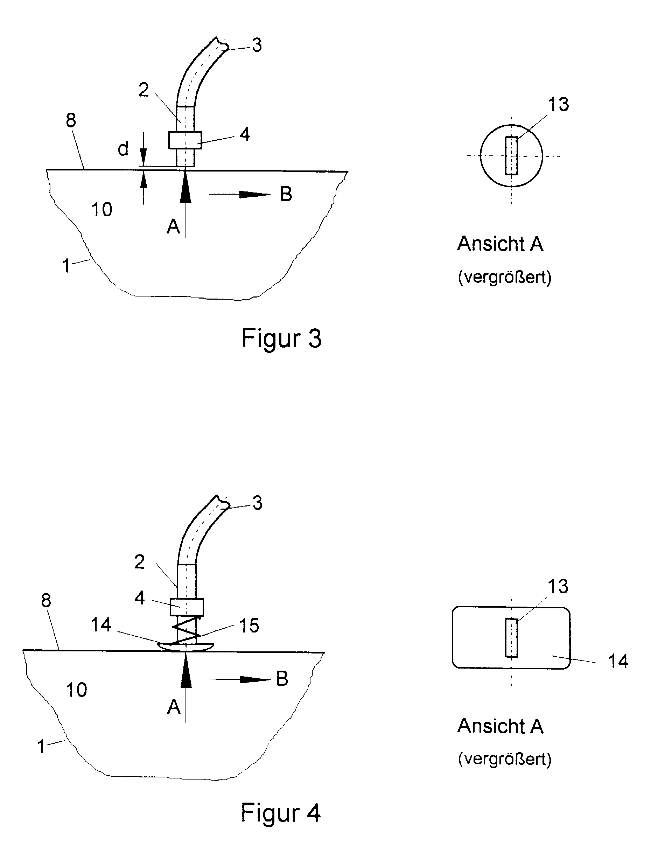

Figur 3 zeigt einen Ausschnitt von Figur 1 mit der Düsenanordnung aus der Blickrichtung des Lagerbockes (5) mit entferntem Führungsrad (6) sowie eine vergrößerte Ansicht A auf das Ende der Düse (2) mit einer rechteckförmigen Düsenöffnung (13). Der Pfeil B deutet die Bewegungsrichtung des Wabenkörpers an.

Figur 4 zeigt eine analoge Darstellung zu Figur 3 mit einer alternativen Ausführungsform der Düse. Das Düsenende ist als Gleitschuh (14) ausgebildet und sitzt federnd auf der Endfläche (8) auf. Zu diesem Zweck ist die Düse vertikal verschieblich in der Führungsstange (4) gelagert und wird durch die Feder (15) leicht auf die Endfläche (8) gedrückt.

## Patentansprüche

1. Verfahren zum Verschließen von Strömungskanälen in einer Ringzone eines zylindrischen Wabenkörpers mit einer keramischen Masse, welcher von zwei Stirnflächen, die die Ein- und Austrittsflächen des Wabenkörpers bilden und einer umhüllenden mantelfläche begrenzt wird,
**dadurch gekennzeichnet,**
daß das Einbringen der keramischen Masse in die Strömungskanäle von einer der beiden Stirnflächen aus mittels mindestens einer Düse erfolgt, die auf die Stirnfläche aufgesetzt ist oder einen geringen Abstand zur Stirnfläche aufweist, wobei Düse und Wabenkörper während des Einbringens der keramischen Masse unter Führung der Düse an der Mantelfläche und/oder an der Stirnflächenkontur relativ zueinander bewegt werden.

2. Verfahren nach Anspruch 1,
**dadurch gekennzeichnet,**
daß das Einbringen der keramischen Masse durch Anlegen eines Über- oder Unterdruckes auf die keramische Masse während des Einbringens oder nach Beendigung des Einbringens unterstützt wird.

3. Verfahren nach den Ansprüchen 1 oder 2,
**dadurch gekennzeichnet,**
daß die Strömungskanäle durch Einbringen der keramischen Masse bis in eine Tiefe von 10 mm verschlossen werden.

4. Verfahren nach einem der Ansprüche 1 bis 3,
**dadurch gekennzeichnet,**
daß die Strömungskanäle durch Einbringen der keramischen Masse über die gesamte Länge des Wabenkörpers gefüllt werden.

5. Verfahren nach einem der Ansprüche 1 bis 3,
**dadurch gekennzeichnet,**
daß die Strömungskanäle von der Ein- und Austrittsfläche nacheinander oder gleichzeitig verschlossen werden.

6. Verfahren nach einem der Ansprüche 1 bis 5,
**dadurch gekennzeichnet,**
daß die Strömungskanäle der Ringzone nur in Teilbereichen der Ringzone verschlossen oder gefüllt werden.

7. Verfahren nach einem der Ansprüche 1 bis 6,
**dadurch gekennzeichnet,**
daß die Ringzone die Randzone des Wabenkörpers bildet.

8. Verfahren nach einem der Ansprüche 1 bis 7,
**dadurch gekennzeichnet,**
daß die in die Strömungskanäle eingebrachte keramische Masse durch Mikrowellen getrocknet und gegebenenfalls anschließend durch Calcinieren gehärtet wird.

9. Verfahren nach einem der Ansprüche 1 bis 8,
**dadurch gekennzeichnet,**
daß der Ausdehnungskoeffizient der gehärteten keramischen Masse denjenigen des Wabenkörpers höchstens um den Faktor 5, bevorzugt höchstens um den Faktor 3 übersteigt.

10. Verfahren nach einem der vorstehenden Ansprüche,
**dadurch gekennzeichnet,**
daß die Düse an der Mantelfläche und/oder an der Stirnflächenkontur entlanggeführt wird oder daß der Wabenkörper um seine Achse unter der Düse hinweggedreht wird.

## Claims

1. Process for closing flow ducts in an annular zone of a cylindrical honeycomb body with a ceramic mass, which honeycomb body is bounded by two end faces, which form the entry and exit faces of the honeycomb body, and by an enveloping superficies,
**characterised in that**
the insertion of the ceramic mass in the flow ducts takes place from one of the two end faces by means of at least one nozzle which is placed on the end face or is at a slight distance from the end face, the nozzle and honeycomb body being moved, relative to one another, during the insertion of the ceramic mass, with guidance of the nozzle on the superficies and/or on the end face contour.

2. Process according to claim 1,
**characterised in that**
the insertion of the ceramic mass is aided by the application of a superatmospheric or subatmospheric pressure to the ceramic mass during insertion or after insertion has been completed.

3. Process according to claims 1 or 2,
**characterised in that**
the flow ducts are closed by the insertion of the ceramic mass to a depth of 10 mm.

4. Process according to one of claims 1 to 3,
**characterised in that**
the flow ducts are filled by the insertion of the ceramic mass over the entire length of the honeycomb body.

5. Process according to one of claims 1 to 3,
**characterised in that**
the flow ducts of the entry and exit face are closed in succession or simultaneously.

6. Process according to one of claims 1 to 5,
**characterised in that**
the flow ducts of the annular zone are closed or filled only in partial regions of the annular zone.

7. Process according to one of claims 1 to 6,
**characterised in that**
the annular zone forms the edge zone of the honeycomb body.

8. Process according to one of claims 1 to 7,
**characterised in that**
the ceramic mass inserted in the flow ducts is dried by microwaves and is optionally then hardened by calcining.

9. Process according to one of claims 1 to 8,
**characterised in that**
the coefficient of expansion of the hardened ceramic mass exceeds that of the honeycomb body by, at most, a factor of 5, preferably by, at most, a factor of 3.

10. Process according to one of the preceding claims,
**characterised in that**
the nozzle is guided along the superficies and/or the end face contour, or that the honeycomb body is turned away about its axis under the nozzle.

## Revendications

1. Procédé pour obturer au moyen d'une masse céramique des canaux d'écoulement dans une zone annulaire d'un élément cylindrique délimité par deux faces frontales servant de faces d'entrée et de sortie de l'élément et par une enveloppe périphérique,
caractérisé en ce que
l'introduction de la masse céramique dans les canaux d'écoulement partant d'au moins une des faces frontales est assurée par une buse appliquée sur cette face ou placée à faible distance de celle-ci, la buse et l'élément se déplaçant l'un par rapport à l'autre pendant l'introduction de la masse céramique, avec guidage de la buse le long de l'enveloppe de l'élément et/ou du contour de la face frontale.

2. Procédé selon la revendication 1,
caractérisé en ce que
l'introduction de la masse céramique est assistée par une pression ou une dépression appliquée à la masse pendant ou après son introduction.

3. Procédé selon la revendication 1 ou 2,
caractérisé en ce que
les canaux d'écoulement sont obturés par introduction de la masse céramique jusqu'à une profondeur de 10 mm.

4. Procédé selon une des revendications 1 à 3,
caractérisé en ce que
les canaux d'écoulement sont remplis sur toute leur longueur par introduction de la masse céramique.

5. Procédé selon une des revendications 1 à 3,
caractérisé en ce que
les canaux d'écoulement sont obturés en partant de la face d'entrée et de la face de sortie, successivement ou simultanément.

6. Procédé selon une des revendications 1 à 5,
caractérisé en ce que
les canaux d'écoulement de la zone annulaire sont obturés ou remplis seulement dans certaines parties de cette zone.

7. Procédé selon une des revendications 1 à 6,
caractérisé en ce que
la zone annulaire est la zone marginale de l'élément.

8. Procédé selon une des revendications 1 à 7,
caractérisé en ce que
la masse céramique introduite dans les canaux d'écoulement est séchée par des micro-ondes et éventuellement durcie ensuite par calcination.

9. Procédé selon une des revendications 1 à 8,
caractérisé en ce que
le coefficient de dilatation de la masse céramique durcie est supérieur à celui de l'élément en nids d'abeilles, d'un facteur égal à 5 au plus, de préférence 3 au plus.

10. Procédé selon une des revendications précédentes,
caractérisé en ce que
la buse est guidée le long de l'enveloppe de l'élément et/ou du contour de la face frontale, ou bien l'élément tourne autour de son axe, en dessous de la buse.
